# FASCICULE DE BREVET EUROPEEN

(11) **EP 0 621 432 B1**
(45) Date de publication et mention de la délivrance du brevet: **11.09.1996**
(21) Numéro de dépôt: 94400843.2
(22) Date de dépôt: 18.04.1994
(51) Int. Cl.: F16L 37/14, F16L 33/207

(54) **Dispositif de jonction étanche entre un conduit souple et un embout tubulaire rigide**
Vorrichtung zum dichten Verbinden eines Schlauches mit einem starren Rohrende
Sealed connection device for a hose and a rigid pipe end

(30) Priorité: 20.04.1993 FR 9304646
(43) Date de publication de la demande: 26.10.1994
(73) Titulaire: AUTOMOBILES PEUGEOT, 75116 Paris (FR); AUTOMOBILES CITROEN, 92200 Neuilly sur Seine (FR)
(72) Inventeur: Liochon, Michel, F-78570 Andresy (FR); Bloret, Jean-Pierre, F-35700 Rennes (FR); Banderier, Philippe, F-27190 Conches en Ouches (FR)
(74) Mandataire: Bouget, Lucien

(56) Documents cités:
- EP-A- 0 072 889
- EP-A- 0 392 234
- DE-A- 3 815 171
- DE-C- 3 815 172
- FR-A- 2 628 819
- FR-A- 2 667 922
- US-A- 3 314 696
- US-A- 3 584 902
- US-A- 4 285 228

## Description

L'invention concerne un dispositif de jonction étanche entre un conduit souple et un embout tubulaire rigide, notamment pour un circuit de refroidissement d'un véhicule automobile.

Les véhicules automobiles modernes comportent un capot de plus en plus effilé, en vue de l'amélioration du coefficient de pénétration du véhicule dans l'air.

La place disponible sous le capot pour le radiateur est donc réduite par rapport aux véhicules plus anciens.

En conséquence, l'eau du circuit de refroidissement est donc relativement moins refroidie sur les véhicules modernes et cette eau se trouve, pendant la marche du véhicule, à une pression et à une température sensiblement supérieures à la pression et à la température de l'eau dans les circuits de refroidissement des véhicules plus anciens.

Cette augmentation de pression entraîne des risques de fuite au niveau des jonctions entre les conduits de raccordement souples et les embouts de raccordement rigides, par exemple dans le cas des conduits de jonction entre le radiateur et le moteur.

Dans l'état de la technique, les conduits de raccordement souples sont engagés sur l'embout rigide correspondant et fixés de manière étanche sur cet embout grâce à un collier de serrage disposé autour du raccord souple.

Les colliers de serrage utilisés peuvent être de différents types.

On utilise par exemple des colliers élastiques, mais ces colliers n'assurent pas une très bonne étanchéité lorsque la pression dans le circuit de refroidissement est sensiblement supérieure à la pression atmosphérique.

De plus, ces colliers élastiques nécessitent l'utilisation d'outils spécifiques pour leur montage et leur démontage.

On peut également utiliser des colliers de serrage à crémaillère mais ces colliers requièrent également l'utilisation d'un outillage spécifique pour leur montage et leur démontage.

De plus, le démontage de tels colliers est une opération très difficile.

Il est également possible d'utiliser des colliers à vis à direction tangentielle mais ces colliers sont très difficiles à placer sur l'extrémité de raccordement du conduit et l'embout. De plus, le bon serrage de ces colliers ne peut être contrôlé visuellement.

En conséquence, les dispositifs de jonction des circuits de refroidissement dans lesquels un conduit souple est enfilé sur un embout rigide du circuit et serré par un collier ne donnent pas satisfaction dans les conditions actuelles et a fortiori, dans le cas de circuits de refroidissement fonctionnant sous haute pression.

De plus, ces dispositifs ne peuvent pas être montés de façon automatique.

Dans les demandes de brevet français n° 88-03458 et 90-12569 aux noms des Demanderesses, on a proposé des dispositifs de jonction entre un conduit souple et un embout tubulaire rigide, notamment pour un circuit de refroidissement d'un véhicule automobile, dans lequel le conduit souple est fixé de manière étanche à l'embout rigide par des organes de maintien et d'étanchéité comportant deux éléments tubulaires rigides disposés de manière coaxiale par rapport à l'extrémité de jonction du conduit souple, à l'intérieur et à l'extérieur de ce conduit, respectivement, de manière que le conduit soit maintenu par serrage ou par sertissage entre les deux éléments tubulaires. La fixation et l'étanchéité du conduit souple par rapport à l'embout rigide sont assurées par coopération de l'un au moins des éléments tubulaires interne et externe avec un moyen de maintien approprié et avec un joint d'étanchéité torique.

Dans le FR-A-2.628.819, le moyen de maintien est constitué par un cavalier ou une bague élastique comportant des branches pouvant s'écarter de manière élastique, introduites dans des fentes traversant la paroi de l'embout tubulaire sur une partie de sa périphérie et dans une gorge prévue sur l'un des éléments tubulaires rigides, les fentes et la gorge étant mises en coïncidence pour réaliser la jonction.

Dans le FR-A-2.667.922, le cavalier peut être monté préalablement sur l'embout rigide, de manière que ses branches introduites dans les fentes de l'embout et en saillie à l'intérieur de l'alésage de l'embout puissent être écartées par des crans en saillie sur l'un des éléments tubulaires, lors de l'engagement en force, dans la direction axiale, des éléments tubulaires solidaires du conduit souple, à l'intérieur de l'embout rigide. Les branches du cavalier se referment ensuite de manière élastique pour assurer le maintien axial du conduit souple à l'intérieur de l'embout, par coopération avec les crans en saillie.

Un tel dispositif est utilisable dans le cas où l'embout rigide est un embout femelle dont l'alésage est prévu pour recevoir le conduit souple équipé des éléments tubulaires constituant la partie mâle de la jonction.

Ce type de jonction n'est pas applicable, dans le cas d'un embout tubulaire rigide de petit diamètre destiné à être engagé à l'intérieur du conduit souple.

En outre, l'agrafe ou cavalier doit être montée sur l'embout rigide qui est solidaire du radiateur ou du moteur du véhicule. Ce montage à l'intérieur du compartiment moteur du véhicule peut présenter certaines difficultés. De même, il peut être difficile de réaliser le démontage de l'agrafe ou cavalier pour libérer la jonction.

Dans le EP-A-0.392.234, on a décrit un dispositif de raccordement rapide d'une tuyauterie souple comportant un élément tubulaire interne engagé dans la tuyauterie et un élément tubulaire externe engagé sur la partie externe de la tuyauterie pour assurer son maintien par serrage radial contre l'élément interne. Une agrafe de fixation destinée à assurer la fixation de la tuyauterie sur un embout rigide introduit dans une partie d'entrée de l'élément tubulaire interne est engagée dans un jeu de fentes traversant la paroi de l'élément tubulaire interne après montage du raccord de la tuyauterie souple sur l'embout rigide. Un tel dispositif de raccordement qui comporte des éléments tubulaires en matière composite ne permettrait pas d'assurer une fixation résistante d'une conduite souple pour un circuit de refroidissement de véhicule automobile sous forte pression ; en outre, la réalisation de l'élément tubulaire interne est assez complexe et ne pourrait être envisagée dans le cadre d'une production en série de pièces métalliques. Enfin, l'agrafe doit être engagée sur les éléments du dispositif de raccordement après leur assemblage, ce qui complique le montage et rend difficile son intégration dans une production en série.

Le but de l'invention est donc de proposer un dispositif de jonction étanche entre un conduit souple et un embout tubulaire rigide, notamment pour un circuit de refroidissement d'un véhicule automobile, comportant deux éléments tubulaires rigides disposés de manière coaxiale, respectivement à l'extérieur et à l'intérieur d'une extrémité de raccordement de ce conduit et désignés respectivement comme bague externe et bague interne, un joint d'étanchéité torique intercalé entre l'un des éléments tubulaires et l'embout rigide et des moyens de maintien de l'un au moins des éléments tubulaires par rapport à l'embout rigide comportant une agrafe ayant des branches pouvant s'écarter élastiquement l'une de l'autre, et au moins une partie en saillie radiale vers l'extérieur de l'embout rigide destinée à coopérer avec les branches de l'agrafe, ce dispositif de jonction pouvant être utilisé sur un circuit à haute pression dans le cas où l'embout tubulaire rigide est la partie mâle de la jonction et permettant de faciliter la mise en place et le démontage des moyens de maintien.

Dans ce but :
- la bague externe et la bague interne réalisées en métal sont serties sur l'extrémité de raccordement du conduit souple,
- la bague externe comporte au moins une fente traversant sa paroi sur une partie de sa périphérie, et
- l'agrafe est montée sur la bague externe de manière à ce que ses branches rectilignes, repliées l'une vers l'autre à l'état non contraint, et introduites dans la fente traversant la paroi de la bague externe, se trouvent partiellement en saillie à l'intérieur de la bague externe.

Afin de bien faire comprendre l'invention, on va maintenant décrire, à titre d'exemple non limitatif, en se référant aux figures jointes en annexe, un mode de réalisation d'un dispositif de jonction suivant l'invention et une installation de montage et de sertissage des bagues externe et interne de ce dispositif.

La figure 1 est une vue en perspective éclatée d'un dispositif de jonction selon l'invention.

La figure 2 est une vue en coupe axiale du conduit souple et des éléments tubulaires, dans leur position d'assemblage avant sertissage.

La figure 3 est une vue en élévation et en coupe d'une installation de sertissage des bagues sur le conduit souple.

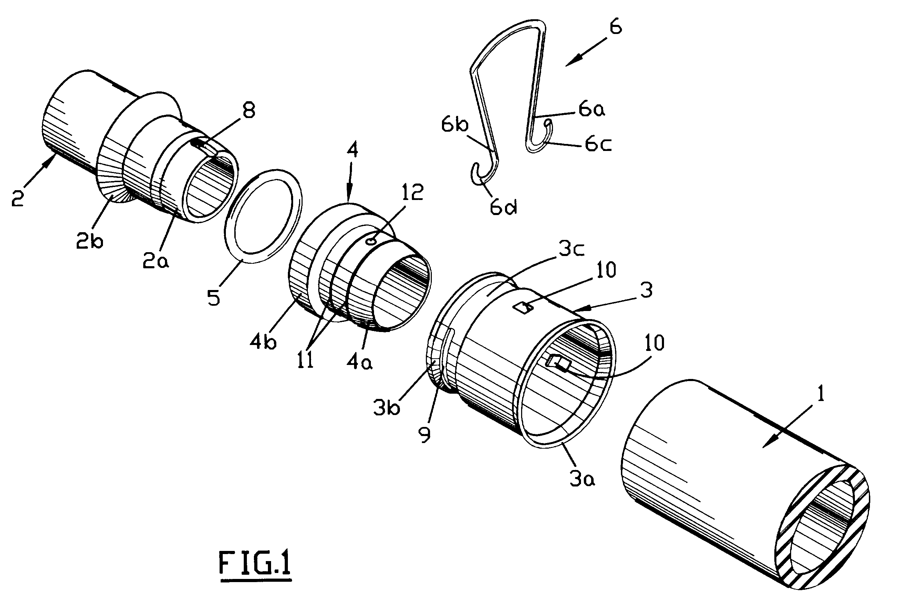

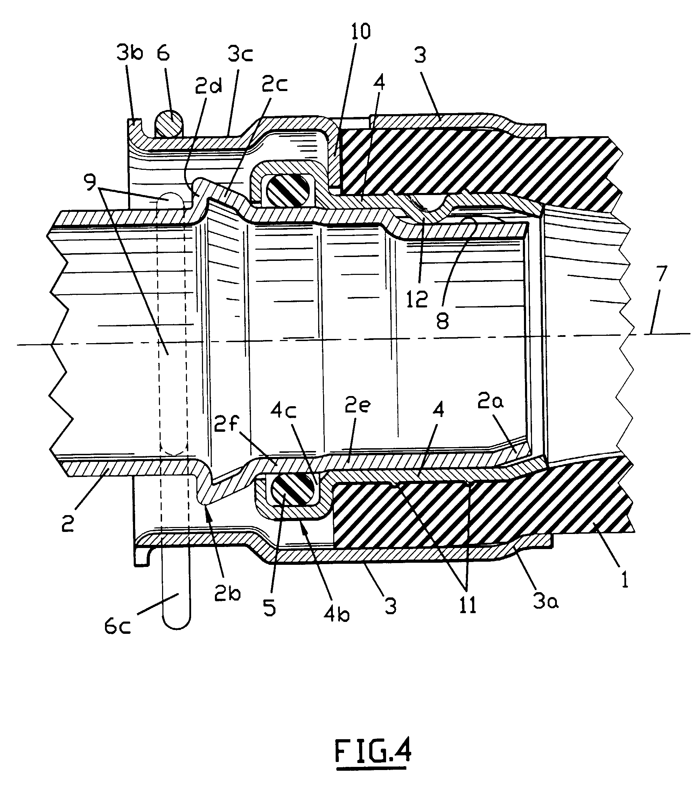

La figure 4 est une vue en coupe axiale du dispositif suivant l'invention assurant la jonction étanche entre le conduit souple et l'embout tubulaire rigide. Sur la figure 1, on a représenté les différents éléments constituant le dispositif de jonction suivant l'invention, avant leur assemblage. Ces éléments comportent un conduit souple 1 constitué par un tuyau de caoutchouc tel qu'une durit du circuit de refroidissement d'un véhicule automobile, un embout tubulaire rigide 2 tel qu'un embout de raccordement d'un radiateur de véhicule automobile, un élément tubulaire externe 3 ou bague externe, un élément tubulaire interne 4 ou bague interne, un joint d'étanchéité torique 5 et une agrafe élastique 6.

Comme il est visible sur les figures 1 et 4, l'embout rigide 2 est constitué par un tube métallique comportant une extrémité d'engagement 2a de forme légèrement tronconique et une partie 2b suivant laquelle la paroi du tube 2 est repoussée vers l'extérieur pour constituer une zone annulaire en saillie radiale par rapport à la surface extérieure de la partie courante du tube 2.

La saillie annulaire 2b comporte une paroi antérieure tronconique 2c inclinée par rapport à l'axe 7 de l'embout 2 et un talon postérieur 2d sensiblement perpendiculaire à l'axe 7.

Entre les parties 2a et 2b, l'embout 2 comporte deux parties cylindriques successives 2e et 2f. La partie 2e présente un diamètre extérieur inférieur au diamètre extérieur de la partie 2f, de manière à limiter le frottement du joint au moment du montage.

L'embout 2 comporte de plus une rainure 8 de direction axiale entre son extrémité antérieure et une zone située à l'avant de la saillie annulaire 2b. La rainure 8 peut être réalisée par repoussage de la paroi du tube 2, par exemple par galetage ou par usinage.

On va maintenant décrire plus en détail les bagues externe 3 et interne 4 en se référant aux figures 1, 2 et 4.

La bague externe est constituée par une virole métallique dont l'extrémité antérieure 3a, légèrement évasée pour faciliter l'engagement du conduit 1 avant le sertissage, est repliée vers l'intérieur contre le conduit souple 1, lors du sertissage de la bague externe 3 et de la bague interne 4 sur le conduit souple 1.

La bague externe 3 comporte une seconde extrémité 3b opposée à l'extrémité 3a constituant une collerette légèrement en saillie vers l'extérieur et délimitant une gorge 3c réalisée par un léger repoussage de la paroi de la bague externe 3 vers l'intérieur.

Dans sa partie constituant la gorge 3c, la paroi de la bague externe 3 est traversée par deux fentes 9 s'étendant chacune sur une partie de la périphérie de la bague externe 3, suivant un arc de l'ordre de 120° ou un peu inférieur.

La bague externe 3 comporte également trois ergots 10 disposés à 120° les uns des autres autour de l'axe de la bague 3 et réalisés par poinçonnage et repoussage vers l'intérieur d'une languette découpée dans la paroi de la bague 3.

La bague interne 4 comporte une partie antérieure d'engagement 4a de forme légèrement tronconique et une partie 4b constituant l'extrémité opposée de la bague interne 4 dans laquelle la paroi de la bague 4 est repoussée vers l'extérieur pour constituer une partie en saillie radiale et une gorge interne 4c fermée par une collerette repliée vers l'intérieur.

Dans sa partie située à l'avant de la saillie annulaire 4b, la bague interne 4 comporte deux nervures annulaires 11 en saillie radiale vers l'extérieur sur sa partie située à l'avant de la saillie 4b, de manière à assurer la retenue du conduit souple 1, après sertissage.

La bague interne 4 comporte de plus une partie 12 repoussée vers l'intérieur ayant une forme sensiblement sphérique ou une forme de goutte destinée à assurer l'orientation de la bague intérieure 4 et du conduit souple 1, par rapport à l'embout rigide 2, lors de sa mise en place, par coopération avec la rainure 8 de l'embout 2.

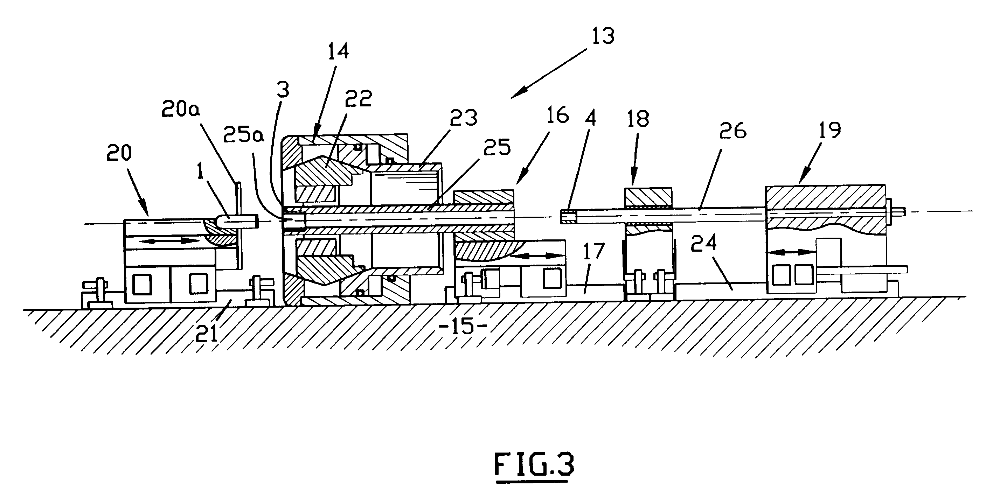

Sur la figure 3, on a représenté une installation permettant de réaliser la fixation par sertissage d'une partie d'extrémité d'un tuyau souple 1 en caoutchouc entre une bague externe telle que la bague 3 et une bague interne telle que la bague 4 qui ont été décrites précédemment.

L'installation désignée de manière générale par le repère 13 comporte une unité de sertissage 14 dont le bâti est fixé sur une plateforme 15, un bloc mobile 16 assurant le support et la mise en place de la bague externe du dispositif de jonction, monté mobile sur un rail horizontal 17 fixé sur la plateforme 15, un support 18 fixé sur la plateforme 15, un bloc mobile 19 de support et de mise en place de la bague interne du dispositif de jonction et un bloc mobile 20 de support et de mise en place du conduit souple 1, monté mobile sur un rail horizontal 21 fixé sur la plateforme 15.

L'unité de sertissage 14 comporte dans une disposition circulaire des mors de sertissage 22 montés mobiles dans la direction radiale à l'intérieur du bâti de l'unité de sertissage et un piston 23 monté mobile à l'intérieur du bâti de l'unité de sertissage 14 venant en prise avec les mors 22, par l'intermédiaire de surfaces tronconiques.

Le déplacement du piston 23 dans un premier sens permet de réaliser le serrage des mors par coopération des surfaces coniques du piston 23 et des mors 22.

Le déplacement du piston 23 dans l'autre sens permet de relâcher la pression exercée sur les mors de sertissage 22.

Le bloc mobile 16 comporte un support tubulaire 25 présentant un logement 25a à son extrémité antérieure, dans lequel peut être placée une bague externe telle que la bague 3 dont on assure le sertissage sur un conduit souple. Le bloc mobile 16 peut être déplacé sur le rail 17 par un vérin, entre une position avancée de chargement représentée sur la figure 3 et une position reculée de sertissage.

Le bloc mobile 19 sur lequel est fixé un mandrin 26 peut être déplacé sur le rail 24, par l'intermédiaire d'un vérin, entre une position reculée de mise en place d'une bague interne à l'extrémité du mandrin 26 et une position avancée de mise en place de la bague interne à l'intérieur d'un conduit souple 1.

Le chariot 20 peut être déplacé sur le rail 21, grâce à un vérin, entre une position de chargement d'un tuyau souple 1, comme représenté sur la figure 3, et une position d'engagement du tuyau souple 1 à l'intérieur d'une bague externe 3 placée dans le logement 25a.

Le fonctionnement de l'installation représentée sur la figure 3 est le suivant.

A l'instant initial, les différents organes de l'installation sont dans leur position représentée sur la figure 3.

Un tuyau souple 1 tel qu'une durit d'un moteur d'automobile est fixé sur le bloc mobile 20 qui comporte une pince 20a de serrage du tuyau souple 1. La pince de serrage 20a comporte deux mors qui peuvent être rapprochés pour maintenir fermement le tuyau souple 1 ou éloignés l'un de l'autre pour libérer le tuyau souple 1. Une bague externe est placée à l'intérieur du logement 25a du support tubulaire 25 du bloc mobile 16.

Une bague interne 4 est placée sur la partie d'extrémité du mandrin 26 du bloc mobile 19.

Le bloc mobile 20 dont la pince 20a se referme sur le tuyau souple 1 est déplacé, de manière à réaliser l'engagement de l'extrémité du conduit souple 1 à l'intérieur de la bague externe 3. L'engagement est facilité par le fait que l'extrémité 3a de la bague externe 3 dirigée vers l'extérieur du logement 25a est légèrement évasée. L'engagement du conduit souple 1 à l'intérieur de la bague externe 3 se termine par la mise en butée de l'extrémité du conduit souple 1 sur les ergots 10 en saillie radiale vers l'intérieur de la bague externe 3.

Par déplacement vers l'avant du bloc mobile 19, on réalise l'engagement de la bague interne 4 à l'intérieur du conduit souple 1, jusqu'au moment où la partie 4b en saillie radiale vient en butée contre les ergots 10 de la bague externe 3.

Le bloc mobile 16 est placé en position reculée, de manière que la bague externe 3 dans laquelle est engagé le tuyau souple 1 soit placée en position de sertissage entre les mors 22.

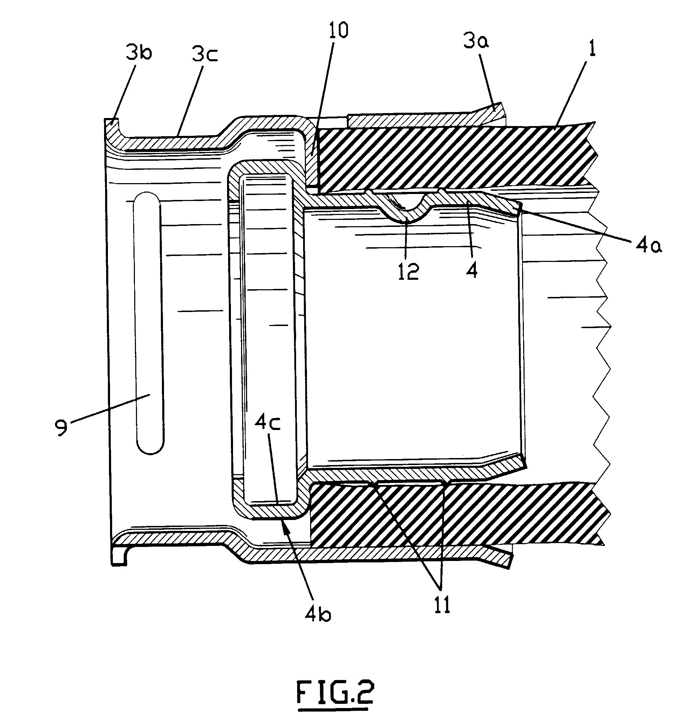

Les différents composants du dispositif de jonction sont alors dans leur position relative représentée sur la figure 2.

Ces éléments sont placés dans l'emprise des mors de sertissage 22. Le piston 23 est déplacé vers l'avant de manière à serrer les mors 22 qui réalisent le sertissage de la bague externe 3 comprenant le conduit souple 1 entre celle-ci et la bague interne 4.

Comme il est visible sur la figure 4, à l'issue du sertissage, la partie antérieure de la bague externe 3 est rabattue vers l'intérieur contre le conduit souple 1 et les nervures circulaires 11 pénètrent à l'intérieur du conduit souple 1 déformé élastiquement. On réalise ainsi une fixation efficace par compression du conduit souple 1 entre la bague externe sertie 3 et la bague interne 4.

Les blocs mobiles 20, 19, 16 reprennent alors leurs positions initiales, libérant le conduit souple 1. La pince 20a s'ouvre pendant le recul du bloc mobile 20.

On réalise alors manuellement le montage d'une agrafe 6 sur la bague externe 3.

Comme il est visible sur la figure 1, l'agrafe 6 réalisée sous la forme d'un cavalier comporte deux branches 6a et 6b qui peuvent être écartées l'une de l'autre par déformation élastique du cavalier et qui comportent à leurs extrémités deux parties repliées 6c et 6d.

Pour réaliser le montage de l'agrafe 6 sur la bague externe 3 assurant le sertissage du conduit souple 1, on enfile l'agrafe 6 sur la bague externe 3, au niveau de la gorge 3c, de manière à engager chacune des branches 6a et 6b dans une fente 9 traversant la paroi de la bague externe 3.

Lorsque l'agrafe 6 est totalement engagée sur la bague externe 3, la partie de l'agrafe commune aux branches 6a et 6b vient en appui contre le fond de la gorge 3c.

Les branches 6a et 6b pénétrant chacune à l'intérieur de la bague externe 3 à travers une fente 9 sont partiellement en saillie à l'intérieur de la bague 3.

Les parties 6c et 6d d'extrémité des branches 6a et 6b repliées sur elles-mêmes se trouvent à l'extérieur de la bague externe 3.

Les branches 6a et 6b de l'agrafe 6 sont légèrement repliées vers l'intérieur, de manière à faire un angle voisin de 30° avec l'axe de symétrie de l'agrafe 6 passant par le centre de la partie arrondie commune aux deux branches 6a et 6b.

L'espace ménagé entre les branches 6a et 6b introduites à l'intérieur de l'alésage de la bague externe 3 présente une dimension minimale inférieure au diamètre extérieur de la partie en saillie 2b de l'embout rigide 2.

Le montage du conduit souple 1 sur lequel ont été serties les bagues 3 et 4, sur l'embout rigide 2 qui est fixé sur une pièce d'un moteur de véhicule automobile telle que le radiateur, est effectué par simple engagement des bagues externe 3 et interne 4 sur l'embout 2, comme représenté sur la figure 4. Préalablement à l'engagement de l'ensemble constitué par le conduit souple 1 et les bagues 3 et 4, un joint d'étanchéité 5 de forme torique généralement en caoutchouc est placé à l'intérieur de la gorge 4c de la bague interne 4.

L'engagement de la bague externe 3 est réalisé par l'extrémité de cette bague comportant la collerette 3b.

Le conduit souple 1 sur lequel sont serties les bagues 3 et 4 est engagé sur l'embout 2, dans une orientation telle que la saillie 12 se trouve en coïncidence avec la rainure 8 de l'embout rigide 2.

L'engagement et le blocage du dispositif de jonction sont ensuite réalisés par simple poussée axiale sur l'ensemble constitué par le conduit souple 1 et les bagues 3 et 4. L'orientation préalable du conduit souple 1 pour son engagement sur l'embout tubulaire rigide 2 est nécessaire, dans la mesure où le conduit souple 1 présente généralement une forme courbe nécessitant sa mise en place dans une orientation particulière par rapport à l'embout rigide.

Lors de l'engagement par poussée axiale du conduit souple 1 et des bagues 3 et 4 sur l'embout rigide 2, les branches 6a et 6b de l'agrafe 6 viennent en contact avec la surface tronconique de la paroi 2c de la partie en saillie 2b du conduit rigide 2, de manière que les branches 6a et 6b s'écartent l'une de l'autre puis se resserrent de nouveau à l'arrière de la paroi 2d de la partie en saillie 2b par élasticité. On réalise ainsi le blocage axial du conduit souple 1 rendu solidaire des bagues 3 et 4 par sertissage, par rapport à l'embout rigide 2.

La jonction est en outre étanche, du fait de la compression du joint torique 5 entre la gorge 4c de la bague interne 4 et la surface extérieure de l'embout rigide 2.

Le montage de la bague externe 3 et de la bague interne 4 sur l'extrémité de raccordement du conduit souple 1 est réalisé de manière totalement automatique grâce à l'installation de sertissage représentée sur la figure 1.

Le montage de l'agrafe 6 sur la bague externe 3 est réalisé sans difficulté, de manière manuelle, du fait que ce montage est effectué sur une pièce parfaitement accessible.

En outre, le montage de l'ensemble mobile du dispositif de jonction constitué par le conduit souple 1 et les bagues 3 et 4 sur la partie fixe constituée par l'embout rigide 2 est réalisé sans difficulté par simple déplacement axial de l'ensemble mobile par rapport à l'embout fixe, après une simple orientation permettant de mettre en coïncidence la partie en saillie 12 de la bague interne 4 avec la rainure 8 de l'embout fixe 2.

En outre, l'agrafe 6 peut être facilement extraite de la bague externe 3 pour assurer le démontage du dispositif de jonction.

Du fait que les branches de l'agrafe sont repliées vers l'intérieur, l'agrafe ne peut être séparée de la bague externe, lors du passage de la partie en saillie de l'embout rigide.

L'invention ne se limite pas au mode de réalisation qui a été décrit.

C'est ainsi qu'on peut imaginer des éléments tubulaires externe et interne dont la forme est différente de celle des bagues 3 et 4 qui ont été décrites précédemment.

L'agrafe engagée dans la bague externe peut être remplacée par tout élément équivalent comportant deux branches engagées dans des fentes de la bague externe et pouvant s'écarter et se rapprocher par élasticité.

Enfin, le dispositif de jonction suivant l'invention peut s'appliquer à tout moyen de raccordement étanche d'un conduit souple et d'un embout rigide d'un circuit destiné à la circulation d'un fluide sous pression.

## Revendications

1. Dispositif de jonction étanche entre un conduit souple (1) et un embout tubulaire rigide (2), notamment pour un circuit de refroidissement d'un véhicule automobile, comportant deux éléments tubulaires rigides (3, 4) disposés de manière coaxiale, respectivement à l'intérieur et à l'extérieur d'une extrémité de raccordement de ce conduit et désignés respectivement comme bague externe (3) et bague interne (4), un joint d'étanchéité torique (5) intercalé entre l'un des éléments tubulaires (4) et l'embout rigide (2) et des moyens de maintien de l'un au moins des éléments tubulaires (3), par rapport à l'embout rigide (2) comportant une agrafe (6) ayant des branches (6a, 6b) pouvant s'écarter élastiquement l'une de l'autre, et au moins une partie (2b) en saillie radiale vers l'extérieur de l'embout rigide (2) destinée à coopérer avec les branches (6a, 6b) de l'agrafe (6), caractérisé par le fait :
- que la bague externe (3) et la bague interne (4) réalisées en métal sont serties sur l'extrémité de raccordement du conduit souple (1),
- que la bague externe (3) comporte au moins une fente (9) traversant sa paroi sur une partie de sa périphérie, et
- que l'agrafe (6) est montée sur la bague externe (3) de manière à ce que ses branches (6a, 6b) rectilignes, repliées l'une vers l'autre à l'état non contraint, et introduites dans la fente (9) traversant la paroi de la bague externe (3), se trouvent partiellement en saillie à l'intérieur de la bague externe (3).

2. Dispositif suivant la revendication 1, caractérisé par le fait que la bague externe (3) comporte au moins deux ergots (10) en saillie radiale vers l'intérieur et que la bague interne (4) comporte une partie annulaire (4b) en saillie radiale vers l'extérieur destinée à venir en butée sur les ergots (10) de la bague externe (3), lors de sa mise en place à l'intérieur du conduit souple (1) engagé dans la bague externe (3) de manière que son extrémité de raccordement soit en butée contre les ergots (10) à l'opposé de la partie annulaire (4b) de la bague interne (4).

3. Dispositif suivant l'une quelconque des revendications 1 et 2, caractérisé par le fait que la bague interne (4) comporte une gorge interne (4c) assurant le logement d'un joint d'étanchéité torique (5) destiné à venir en contact étanche avec l'embout rigide (2).

4. Dispositif suivant l'une quelconque des revendications 1 à 3, caractérisé par le fait que la bague externe (3) comporte une extrémité évasée (3a) par laquelle vient s'engager le conduit souple (1) et que la bague interne (4) comporte au moins deux nervures (11) en saillie vers l'extérieur, de manière à faciliter le montage et le sertissage de la bague externe (3) et de la bague interne (4) sur l'extrémité de raccordement du conduit souple (1).

5. Dispositif suivant l'une quelconque des revendications 1 à 5, caractérisé par le fait que la bague interne (4) comporte un ergot (12) constitué par repoussage vers l'intérieur d'une zone de la paroi de la bague interne (4) et que l'embout rigide (2) comporte une rainure (8) externe destinée à coopérer avec la partie en saillie (12) de la bague interne (4) pour assurer l'orientation du conduit souple (1) par rapport à l'embout rigide (2), lors de la mise en place du dispositif de jonction.

6. Dispositif suivant l'une quelconque des revendications 1 à 5, caractérisé par le fait que les branches (6a, 6b) de l'agrafe (6) sont repliées l'une vers l'autre à l'état non contraint, de manière à faire entre elles un angle non nul, compris entre 0 et environ 30°.

7. Dispositif suivant l'une quelconque des revendications 1 à 6, caractérisé par le fait que la paroi de la bague externe (3) est traversée par deux fentes (9) disposées suivant deux arcs de cercle d'une section transversale de la bague (3) ayant une amplitude voisine de 120°.

8. Dispositif suivant l'une quelconque des revendications 1 à 7, caractérisé par le fait que la bague externe (3) comporte une gorge externe (3c) délimitée à l'une des extrémités de la bague externe (3) par une collerette (3b), à l'intérieur de laquelle est usinée la fente (9) et sur laquelle une partie de l'agrafe (6) de liaison entre les branches (6a, 6b) de l'agrafe (6) vient en appui.

## Patentansprüche

1. Vorrichtung zum dichten Verbinden einer flexiblen Leitung (1) und eines starren, röhrenförmigen Ansatzstücks (2), insbesondere für einen Kühlkreis eines Kraftfahrzeugs, mit zwei starren, röhrenförmigen Elementen (3, 4), die koaxial innerhalb bzw. außerhalb eines Verbindungsendes dieser Leitung angeordnet sind und als äußerer Ring (3) bzw. als innerer Ring (4) dienen, einer toroidförmigen Dichtung (5), die zwischen eines der röhrenförmigen Elemente (4) und das starre Ansatzstück (2) eingefügt ist, und Haltemitteln für wenigstens eines der röhrenförmigen Elemente (3) in bezug auf das starre Ansatzstück (2), die eine Spange (6) mit Schenkeln (6a, 6b), die sich elastisch voneinander entfernen können, und wenigstens einen vom starren Ansatzstück (2) radial nach außen vorstehenden Teil (2b) umfassen, welcher dazu bestimmt ist, mit den Schenkeln (6a, 6b), der Spange (6) zusammenzuwirken, gekennzeichnet durch die Tatsache,
- daß der äußere Ring (3) und der innere Ring (4), die aus Metall verwirklicht sind, auf das Verbindungsende der flexiblen Leitung (1) gequetscht sind,
- daß der äußere Ring (3) wenigstens einen Schlitz (9) enthält, der in einem Umfangsabschnitt seine Wand durchsetzt, und
- daß die Spange (6) am äußeren Ring (3) in der Weise angebracht ist, daß ihre geradlinigen Schenkel (6a, 6b), die im unbelasteten Zustand zueinander gebogen sind und in den die Wand des äußeren Rings (3) durchsetzenden Schlitz (9) eingeschoben sind, teilweise in den vom äußeren Ring (3) umgebenen Raum vorstehen.

2. Vorrichtung nach Anspruch 1, gekennzeichnet durch die Tatsache, daß der äußere Ring (3) wenigstens zwei radial nach innen vorstehende Vorsprünge (10) enthält und daß der innere Ring (4) einen ringförmigen Teil (4b) enthält, der radial nach außen vorsteht und dazu bestimmt ist, an den Vorsprüngen (10) des äußeren Rings (3) anzuschlagen, wenn der innere Ring (4) in der flexiblen Leitung (1) angeordnet wird, die ihrerseits im äußeren Ring (3) in der Weise in Eingriff ist, daß ihr Verbindungsende an dessen Vorsprüngen (10) auf der dem ringförmigen Teil (4b) des inneren Rings (4) gegenüberliegenden Seite anschlägt.

3. Vorrichtung nach irgendeinem der Ansprüche 1 und 2, gekennzeichnet durch die Tatsache, daß der innere Ring (4) eine innere Nut (4c) enthält, die die Aufnahme einer toroidförmigen Dichtung (5) ermöglicht, die dazu vorgesehen ist, mit dem starren Ansatzstück (2) in dichten Kontakt zu gelangen.

4. Vorrichtung nach irgendeinem der Ansprüche 1 bis 3, gekennzeichnet durch die Tatsache, daß der äußere Ring (3) ein aufgeweitetes Ende (3a) enthält, über das die flexible Leitung (1) in Eingriff gelangt, und daß der innere Ring (4) wenigstens zwei nach außen vorstehende Rippen (11) enthält, derart, daß die Montage und die Quetschung des äußeren Rings (3) und des inneren Rings (4) am Verbindungsende der flexiblen Leitung (1) erleichtert wird.

5. Vorrichtung nach irgendeinem der Ansprüche 1 bis 5, gekennzeichnet durch die Tatsache, daß der innere Ring (4) einen Vorsprung (12) enthält, der durch Treiben einer Zone der Wand des inneren Rings (4) nach innen gebildet ist, und daß das starre Ansatzstück (2) eine äußere Rille (8) enthält, die dazu bestimmt ist, mit dem vorstehenden Teil (12) des inneren Rings (4) zusammenzuwirken, um bei der Anbringung der Verbindungsvorrichtung die Orientierung der flexiblen Leitung (1) in bezug auf das starre Ansatzstück (2) sicherzustellen.

6. Vorrichtung nach irgendeinem der Ansprüche 1 bis 5, gekennzeichnet durch die Tatsache, daß die Schenkel (6a, 6b) der Spange (6) im unbelasteten Zustand aufeinander zu gebogen sind, daß sie einen von Null verschiedenen Winkel, der zwischen Null und ungefähr 30° liegt, gebildet wird.

7. Vorrichtung nach irgendeinem der Ansprüche 1 bis 6, gekennzeichnet durch die Tatsache, daß die Wand des äußeren Rings (3) von zwei Schlitzen (9) durchsetzt ist, die längs zweier Kreisbögen eines transversalen Abschnitts des Rings (3) angeordnet sind, die eine Amplitude in der Umgebung von 120° besitzen.

8. Vorrichtung nach irgendeinem der Ansprüche 1 bis 7, gekennzeichnet durch die Tatsache, daß der äußere Ring (3) eine äußere Nut (3c) enthält, die an einem der Enden des äußeren Rings (3) durch einen Kranz (3b) begrenzt wird, in dessen Innenraum der Schlitz (9) ausgebildet ist und auf dem sich ein Teil der Spange (6), der die Schenkel (6a, 6b) der Spange (6) verbindet, abstützt.

## Claims

1. Sealed connection device for a hose (1) and a rigid tubular end (2), especially for a cooling circuit of a motor vehicle, comprising two rigid tubular elements (3, 4) arranged coaxially, respectively inside and outside a joining end of that hose and respectively called the external rung (3) and the internal ring (4), a toric seal (5) interposed between one of the tubular elements (4) and the rigid end (2), and means for holding at least one of the tubular elements (3) with respect to the rigid end (2) comprising a clip (6) having arms (6a, 6b) which can move apart from one another resiliently, and at least one portion (2b) which projects radially towards the outside of the rigid end (2) and which is co-operable with the arms (6a, 6b) of the clip (6), characterised in that:
- the external ring (3) and the internal ring (4) produced from metal are squeezed onto the joining end of the hose (1);
- the external ring (3) comprises at least one slot (9) which extends through its wall over a portion of its periphery; and
- the clip (6) is mounted on the external ring (3) in such a manner that its rectilinear arms (6a, 6b) which are folded towards one another in the unconstrained state, and which are introduced into the slot (9) extending through the wall of the external ring (3), project partially inside the external ring (3).

2. Device according to Claim 1, characterised in that the external ring (3) comprises at least two lugs (10) which project radially towards the inside and in that the internal ring (4) comprises an annular portion (4b) which projects radially towards the outside and which is to abut the lugs (10) of the external ring (3), when it is positioned inside the hose (1) which is engaged in the external ring (3) in such a manner that its joining end abuts the lugs (10) opposite the annular portion (4b) of the internal ring (4).

3. Device according to either Claim 1 or Claim 2, characterised in that the internal ring (4) comprises an internal groove (4c) which houses a toric seal (5) which is to come into sealing contact with the rigid end (2).

4. Device according to any one of Claims 1 to 3, characterised in that the external ring (3) comprises a flared end (3a) by way of which the hose (1) locates, and in that the internal ring (4) comprises at least two ribs (11) projecting towards the outside, in such a manner as to facilitate the mounting and squeezing of the external ring (3) and the internal ring (4) on the joining end of the hose (1).

5. Device according to any one of Claims 1 to 4, characterised in that the internal ring (4) comprises a lug (12) formed by pressing towards the inside an area of the wall of the internal ring (4) and in that the rigid end (2) comprises an external rib (8) that is co-operable with the projecting portion (12) of the internal ring (4) in order to orientate the hose (1) with respect to the rigid end (2) during the positioning of the connection device.

6. Device according to any one of Claims 1 to 5, characterised in that the arms (6a, 6b) of the clip (6) are folded towards one another in the unconstrained state in such a manner as to form a non-zero angle of between 0 and approximately 30° between them.

7. Device according to any one of Claims 1 to 6, characterised in that the wall of the external ring (3) is traversed by two slots (9) arranged according to two arcs of a cross-section of the ring (3) having a size of approximately 120°.

8. Device according to any one of Claims 1 to 7, characterised in that the external ring (3) comprises an external groove (3c) delimited at one end of the external ring (3) by a flange (3b), inside which the slot (9) is machined and on which a portion of the clip (6) connecting the arms (6a, 6b) of the clip (6) is supported.
